# EUROPEAN PATENT APPLICATION

(11) **EP 0 809 410 A2**
(43) Date of publication of application: **26.11.1997**
(21) Application number: 97108138.5
(22) Date of filing: 20.05.1997
(51) Int. Cl.: H04Q 3/66, H04M 15/00

(54) **System and method for routing calls based on real-time call pricing information**

(30) Priority: 21.05.1996 US 651175
(71) Applicant: AT&T Corp., New York, NY 10013-2412 (US)
(72) Inventor: Jagadish, Hosagrahar Visvesvaraya, Berkeley Heights, New Jersey, 07922 (US); Mumick, Inderpal Singh, Berkeley Heights, New Jersey, 07922 (US); Silberschatz, Abraham, Summit,New Jersey 07901 (US)
(74) Representative: KUHNEN, WACKER & PARTNER

(57) **Abstract**

A system for routing calls according to call pricing data, wherein the call pricing data is updated in real-time. In a preferred embodiment, a Real-Time Analysis Engine (RAE) prices calls in real-time by applying customer specific data to Automatic Message Accounting (AMA) records. The priced call data generated by the RAE is stored in a Summary Database (SD). When a particular customer initiates a call, the originating network switch may recall some or all of the priced call data from the SD, and use the recalled data as a basis for deciding how to route the call.

## Description

### Technical Field

This invention relates to communications networks, and more particularly to a system and method for routing calls based on real-time call pricing information.

### Background of the Invention

The use of automatic accounting systems to rate telephone calls is well known in the art of communication networks. In a typical automatic accounting system, when a call is first dialed, control equipment in the originating office determines whether the call is billable (i.e. not covered by a monthly rate). If the call is billable, an accounting record is created for the purpose of recording: the number of the calling telephone, the number of the receiving telephone, the time the call was answered, and the time the call was terminated. The information in the accounting record can then be used to "rate" the call.

Rating the call refers to the process by which the charge for the call is determined. It involves: (1) calculating the distance between the calling and called end offices; and (2) applying the appropriate rate - based on the calculated distance, the date on which the call was made, the time of day at which the call was made, and the call duration. Rating is not customer specific, and is conventionally performed in batch. It is to be distinguished from billing, which is customer specific. Furthermore, although billing is conventionally performed in batch, like rating, the batch times for billing and rating are usually different.

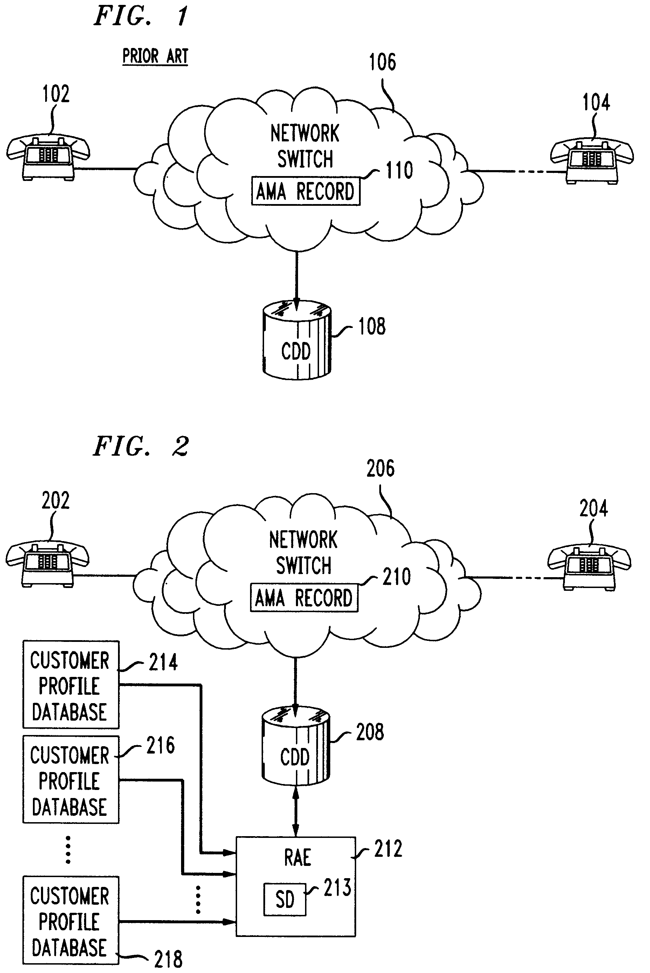

Billing is the process of aggregating a customers rated calls over a period of time to determine the customers bill for the period. Typically, the period is a month and the aggregation yields the customer's monthly phone bill. An architecture currently used for generating customer bills is shown in Fig. 1.

Referring to Fig. 1, there is shown a calling telephone **102**, a called telephone **104**, a telephone network switch **106** and a Call Detail Database (CDD) **108**. An Automatic Message Accounting (AMA) record, represented by a block **110**, is also shown. As indicated by the figure, a billable call may be initiated at telephone **102** and routed through switch **106**, e.g., an American Telephone & Telegraph Co., Inc. (AT&T) 4ESS® switch, to telephone **104**. The switch generates AMA record **110**, which includes the information necessary to rate the call. The AMA record is passed to the CDD where it is stored until the end of the customer's billing period. At the end of the billing period, AMA record **110** and all other AMA records generated for the customer are retrieved from the CDD and used to calculate the customers bill.

One way to generate a customer bill is to simply compute a charge for each AMA record stored in the CDD and then aggregate the charges. However, generating a bill usually involves more than a straight forward aggregation. Modifications to the aggregate may be necessary. Typically, modifications to the aggregate are necessary because of the imprecise rating system of applying a general rate to each call, without taking into consideration whether a customer subscribes to a billing service or plan. For example, customers who subscribe to plans, such as AT&T's True USA®, may be entitled to discounts on some or all of their calls; however a general rate, that does not account for the plan(s), is applied to all of the customer's ratable calls. Accordingly, at the end of the billing period modifications must be made to the customer's aggregate bill to reflect the appropriate discount(s). After the bill is modified to reflect the discount(s), it is sent to the customer for payment.

### Summary of the Invention

It has been recognized that, since the present billing systems cannot provide rating records that incorporate the modifications necessary to reflect a particular billing plan, such procedures are necessarily postponed until the end of the billing period. As such, certain types of billing options cannot be implemented. However, in the competitive telecommunication service market, it is advantageous for a service provider to offer as many billing alternatives as possible. In this regard, the invention of commonly assigned, concurrently filed, pending U.S. patent application entitled: SYSTEM AND METHOD FOR PRICING TELECOMMUNICATION TRANSACTIONS (Attorney Docket No.: Jagadish 10-3-4) provides a system and method for performing real-time processing of accounting records so as to generate priced call data that reflects the billing services to which a particular customer may subscribe. In contrast, the present invention provides a system and method for using the priced call data of the Jagadish 10-3-4 invention as a basis for routing calls.

In a preferred embodiment of the invention, a Real-Time Analysis Engine (RAE) updates customers' bills in real-time by applying customer specific data to accounting records. In a typical update, a customer initiates a call that is routed through an originating telephone network switch. The switch generates an accounting record for the call, and the record is passed to the RAE where the call is rated. The RAE then matches the rated call to a customer, locates that customer's billing data, and applies any customer specific discounts to the rated call. The process of rating and discounting a call is referred to as "pricing the call", and the result of the pricing process is referred to as a "priced call value". Once a priced call value is generated for the customer's call, it may be added to other priced call values for the customer to produce a current bill (a type of summary information) for the customer. Since the server performs call pricing in real-time, the customer's current bill may be kept up to date on a real-time basis. Preferably, the customers current bill is saved in a Summary Database (SD) within the RAE, and the customer's priced call values are saved in the CDD.

In addition to maintaining customers' current bills, the RAE may be used to maintain various other types of summary information for customers. For example, a customer may subscribe to a plan in which calls made during the hours between 5:00pm and 9:00am receive a 10% discount; in which case it is useful to maintain a summary field containing the number of minutes of calls that the customer has made during the discount period.

In the preferred embodiment, summary information in addition to current bills is stored in the SD along with the current bills. Whenever, a customer initiates a call, the originating switch may query the SD for all of, or a portion of, that customers stored summary information. The query is placed through a datalink that connects the switch to the RAE. This same datalink may be used to carry the information requested in the query from the RAE to the switch. Once the requested information is received at the switch, the switch may use it in deciding how to route the customers call.

### Brief Description of the Drawings

Fig. 1 is a block diagram of a prior telephone call billing system.

Fig. 2 is a block diagram of a telephone call billing system in accordance with a preferred embodiment of the present invention.

Fig. 3 is a block diagram of an alternative telephone call billing system in accordance with the present invention.

Fig. 4 is a block diagram of a second alternative telephone call billing system in accordance with the present invention.

Fig. 5 is a flowchart depicting the steps involved generating real-time call prices and real-time customer balances according to the present invention.

Fig. 6 is a block diagram of a telephone call billing system according to the present invention, in which calls may be routed based on real-time pricing information.

Fig. 7 is a block diagram of an alternative telephone call billing system according to the present invention, in which calls may be routed based on real-time pricing information.

Fig. 8 is a block diagram of a second alternative telephone call billing system according to the present invention, in which calls may be routed based on real-time pricing information.

### Detailed Description

Referring to Fig. 2, there is shown a block diagram of a telephone system in accordance with a preferred embodiment of the present invention. As can be seen from the figure, a call may be initiated at a first telephone **202** and directed to a second telephone **204**. The call is routed through a network switch **206** that generates an AMA record **210** for the call and passes the AMA record to a CDD **208**. It should be noted here that there are an abundance of protocols and transmission media that may be used for passing the data from the switch to the CDD. For example, suitable protocols include the well known File Transfer Protocol (FTP) and Transmission Control Protocol/Internet Protocol; and suitable transmission media include twisted shielded pair wires, fiber optic lines, coaxial cable, and wireless links. Moreover, these protocols and media are suitable for use in all data transfers and queries hereinafter described.

In any event, once the AMA record has been passed to the CDD, it is available for use in pricing the call. To this end, the AMA record is passed to a Real-Time Analysis Engine (RAE) **212**, which may be a general purpose computer capable of running the software necessary to implement the invention. The RAE applies any customer specific billing parameters to the AMA record to produce a processed AMA record. It then passes both the AMA record and the processed AMA record back to the CDD for storage. A method for passing the data back to the CDD is disclosed in co-pending, commonly assigned, US Patent Application Serial No.: 08/607,983 - entitled "Compression and Buffering of a Stream with Data Extraction Requirements" - which application is incorporated herein by reference.

The RAE performs its functions the instant the switch passes the AMA record to the CDD (i.e. it performs call pricing in real-time). In order to achieve real-time processing of AMA records the invention must overcome two primary obstacles. First, the customer specific data is fragmented across multiple business units, with no cohesive notion of an integrated customer profile. This situation is depicted in Fig. 2, which shows several customer profile databases **214**, **216** and **218**. As shown in the figure, the invention overcomes this obstacle through the use of an integrated customer profile database located within the RAE. Software tools update the integrated customer profile database in response to updates of the individual customer profiles **214**, **216** and **218** so that the integrated database always contains current information on all customers.

The second obstacle to performing real-time pricing of telephone calls is the sheer volume of customer and telephone call data. The volume makes it difficult to store, rate, and query call data in real-time. To surmount this obstacle the invention accumulates summary information as each individual call (AMA) record is received and rated in real-time. It is generally desirable for a telephone network to maintain a customers current bill. Thus, one type of accumulated summary information may be current bills for each network customer. Nevertheless, it may be useful to accumulate other types of summary information for particular customers. The nature of the accumulated summary information for a particular customer depends upon the services subscribed to by that customer. For example, a customer may subscribe to a plan in which calls made during the hours between 5:00pm and 9:00am receive a 10% discount; in which case it is useful to maintain a summary field containing the number of minutes of calls that the customer has made during the discount period.

It may also be useful to accumulate summary information across customers. For example, it may be desirable for marketing purposes to know customers' total expenditure on a particular plan for a given billing period. In such a case, the prices of all calls made under the subject plan, regardless of the customer, may be aggregated for the given billing period to provide a current total expenditure on the plan.

In any case, the summary information is stored in a Summary Database (SD) **213** that is located within the in the RAE. Thus, in the preferred embodiment, AMA records and processed AMA records are stored in the CDD, while summary information is stored in the SD. Nevertheless, it should be noted that many alternative storage schemes may be employed without departing from the spirit of the invention. For example, in one alternative scheme, AMA records are stored in the CDD, summary information are stored in the SD, and processed AMA records are stored in both the CDD and SD.

There are many applications in which the priced call data provided by the present invention may be used. These include those situations in which a person rents telephone equipment or services and must pay for the usage of the equipment or service at the end of the rental period. The present invention allows the rental company to bill for usage without adding any hardware or software in the rental equipment. All that is required is that the rental company be given access to the data provided by the present invention. One way to provide such access is by allowing the rental company to query the SD, and/or CDD, directly through a network connection.

An example of a rental application for the present invention involves including cellular phones in rental cars. The rental car company can bill for inclusion of the cellular phone based on the renter's usage. This is done by resetting the cellular phone account at the time of rental and placing a query to the network servicing the phone at the time of return. The cellular phone account balance - kept current in accordance with the present invention - is simply added to the rental customer's bill. As an option, the rental customer can be provided with a detailed bill that includes the price of each call made during the rental period.

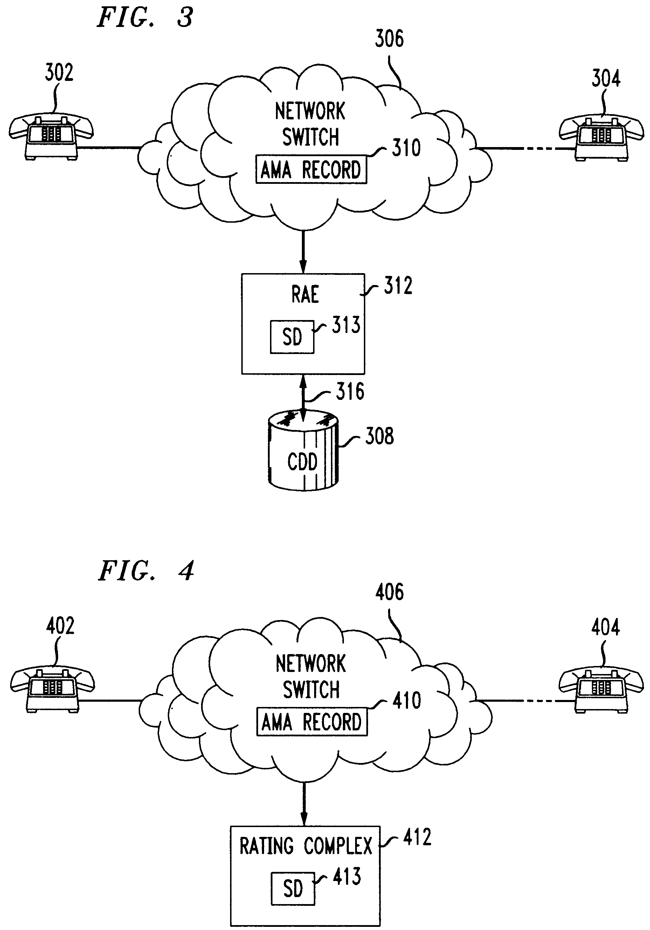

Referring now to Fig. 3, there is shown an alternative preferred embodiment of a telephone system in accordance with the present invention. As shown in the figure, a call may be initiated at a first telephone **302** and directed to a second telephone **304**. The call is routed by a network switch **306**, which generates an AMA record **310** for the call. The AMA record is passed to a RAE **312** which applies customer specific parameters to the AMA record to produce a processed AMA record. The AMA record and processed AMA record are then passed to a CDD **308** for storage.

Like the RAE of Fig. 2, the RAE of Fig. 3 includes a SD **313**. The RAE of Fig. 3 also includes an integrated customer profile - although, it should be noted that for simplicity of presentation the individual customer profile databases are not shown in Fig. 3, nor in the figures that follow. Also, like the RAE of Fig. 2, the RAE of Fig. 3 accumulates summary information as each individual call record is received and rated in real-time, the summary information being stored in the SD **313**. As in the prior described embodiment, alternative schemes may be employed for the storage of the AMA records, processed AMA records, and summary information.

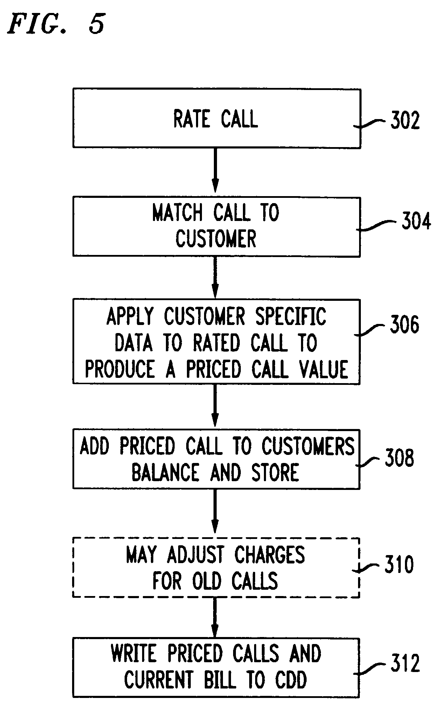

Fig. 4 shows another preferred embodiment of a telephone system in accordance with the present invention. In the Figure 4 embodiment, as in the previous embodiments, a call initiated at a first telephone **402** may be directed to a second telephone **404** through a network switch **406**, which generates an AMA record **410**. However, in the Fig. 4 embodiment the AMA record is passed to a Rating Complex (RC) **412**. The RC is a unit which performs the functions of the CDD and RAE, and may therefore be characterized as a combined CDD and RAE. As shown in the figure, the RC may include a SD **413** for storing the summary information separately from the AMA records and processed AMA records. As in the prior described embodiments, alternative schemes may be employed for the storage of the AMA records, processed AMA records, and summary information.

It should be noted that although all three embodiments discussed above depict a call as being initiated from a first telephone and directed to a second telephone, it is possible that calls may be initiated by, and directed to, many different types of communication devices. For example, a call may be initiated by a fax machine and directed to a personal computer. Moreover, a call may be initiated by a single communication device and directed to multiple communication devices. For example, a call may be initiated by a fax machine and directed to multiple independent personal computers. For purposes of this description, each instance of a single initiating call being directed to a different terminating device will be considered an independent call.

Fig. 5 shows, in flowchart form, a procedure that a RAE may use to perform real-time processing of AMA records for a customer and maintain a current bill for the customer. In the following description of the flowchart references will be made to the embodiment shown in Fig. 2.

Upon receiving an AMA record from CDD **208**, the first step RAE **212** takes is to rate the call (step **302**). It must then match the rated call to the customer (step **304**) so that customer specific parameters can be applied to the call. Several well known techniques can be used to match the rated call to the customer. One such technique uses Automatic Number Identification (ANI). In an ANI system, the number of the telephone station from which a call is initiated is determined and used to identify the party who initiated the call. Accordingly, in the Fig. 2 embodiment, the number of telephone **202** may be determined and passed to the RAE along with the AMA record. The RAE may then cross-reference the number to the customer profile containing the customer specific data to be used for the current call. Once the appropriate profile has been determined, the RAE applies the customer specific data to the rated call to produce a priced call value (step **306**). The priced call value may be added to the customers previous balance to create a new balance, or "current bill" (step **308**). Finally, the priced call value (processed AMA record) is stored in the CDD, and the current bill (summary information) is stored in the SD (step **312**). As described in relation to Fig. 2, an alternative scheme is to store both the priced call value and current bill in the SD; in which case, step **312** would involve storing the priced call value and the current bill - collectively termed "the priced call data" - to the SD.

As an optional step in the procedure of Fig. 5, the RAE may adjust charges for old calls to reflect certain types of billing plans (step **310**). For example, a customer may subscribe to a plan in which the customer receives a conditional 10% discount on all calls, the condition being that the customer exceed $100.00 in total charges for a given billing period. In such a scenario, calls will initially be billed at the full rate, until such time that the customer reaches $100.00 in total charges. Thus, if the customer does reach $100.00 before the end of the billing period, not only will successive calls need to be discounted by 10%, but all previous calls will need to be discounted by 10%. This requires that prices generated for the previous calls be retroactively adjusted.

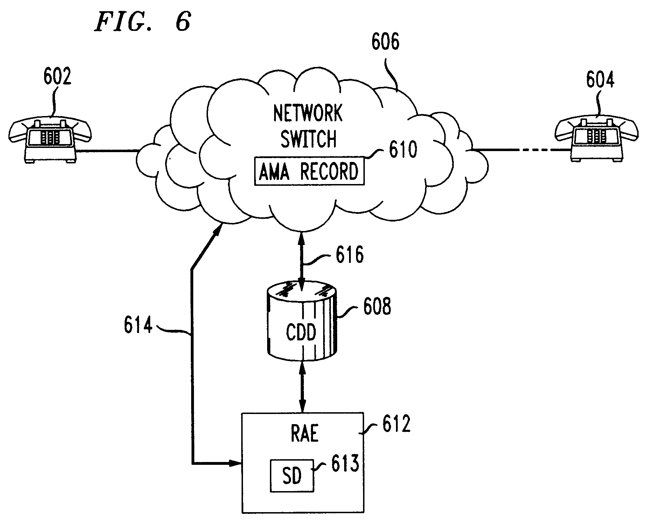

The priced call data provided through the RAE may be used as a basis for making call routing decisions. An embodiment capable of performing this function is shown in Fig. 6. Fig. 6 is the same as Fig. 2 with two exceptions: (1) the omission of the individual customer profile databases, and (2) the addition of a datalink **614**. As shown in the figure, a call may be initiated at a telephone **602** and routed to a telephone **604** through a network switch **606**. The switch generates an AMA record **610** that is passed to a CDD **608**, and then on to an RAE **612** for processing. As described above, the RAE may use the AMA records to generate priced call data in the form of priced call values and current bills. This priced call data may be stored in SD **613**.

As part of the process of routing a call, switch **606** may query the RAE for some or all of the priced call data via datalink **614**. In this manner, the data returned in response to the query may be used by the network and/or customer in deciding how the call should be routed. A method that may be used to query the RAE is disclosed in co-pending, commonly assigned, US Patent Application Serial No.: 08/446,170 - entitled "Method for Querying Incrementally Maintained Databases" - which application is incorporated herein by reference. An illustrative scenario in which a call is routed based on priced call data is described below, with reference to Fig. 6.

As part of a rental car agreement a customer is provided with a cellular phone. The customer is not to be billed for the cellular phone based on usage, however, the customer is not to exceed a predetermined usage allowance during the rental period. The amount of usage allowance expended by the customer is maintained as summary information by the RAE. When the customer initiates a call from the cellular phone (represented by telephone **602**) switch **606**, which may be the originating office switch, queries the RAE via datalink **614** to determine whether or not the customer has enough allowance remaining to complete the call to the desired terminating station (represented by telephone **604**). If the customer does not have sufficient allowance remaining, switch **606** does not route the call to telephone **604**, but rather takes some alternative action, such as allowing the customer to dial an alternative number. As an added feature, the network may initiate an announcement to the customer via a voice response unit, informing the customer that he does not have sufficient allowance to cover the desired call and that the customer may dial an alternative number.

Many variations are possible in the above-described rental scenario. For instance, upon the initiation of a call by the rental customer, a query may be generated, and an indication that the customer has exceeded his allowance may be returned. However, rather than simply preventing the customer from making the call, the customer may be notified that he has exceeded his balance and may be given the option to continue at an additional cost.

In addition, there are many possible alternative embodiments of the Fig. 6 system, each of which are capable of using real-time priced call data to route calls. One such alternative embodiment is realized by making a small modification to the embodiment shown in Fig. 6. Instead of providing a datalink from the switch to the RAE, a two-way datalink **616** may be provided between the switch an the CDD. Thus, queries from the switch may be made directly to the CDD, and the CDD can pass the desired data back to the switch. Of course, in such an embodiment it is necessary that the desired data be present in the CDD. In this regard, the system may be set up so that the RAE passes all possible desired data, e.g., current bills, back to the CDD when it performs its real-time pricing calculations.

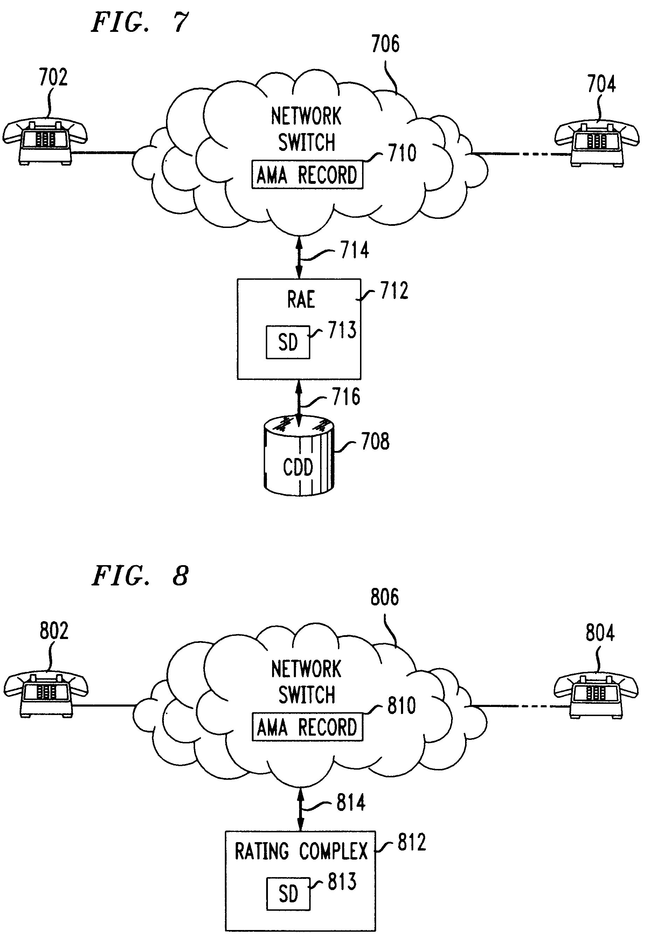

Further embodiments capable of using the real-time pricing data are shown in figures 7 and 8. Figures 7 and 8 are analogous to figures 3 and 4, respectively. Fig. 7 shows telephones **702** and **704**, network switch **706**, AMA record **710**, RAE **712** (including SD **713**) and CDD **708**. Fig. 7 also shows a two-way connection **714** between the switch and RAE, and a two-way connection **716** between the RAE and the CDD. These connections facilitate the querying of the RAE as part of the call routing process. In particular, two-way connection **714** allows the RAE to pass to the switch information which has been requested by the switch as part of a query. Two-way connection **716** allows for the transfer of information from the CDD to the RAE in the event that information requested by the switch is stored in the CDD and is not immediately available at the RAE; in which case the RAE may query the CDD for the information and then pass it on to the switch.

Fig. 8 shows telephones **802** and **804**, network switch **806**, AMA record **810** and RC **812** (including SD **813**). Fig. 8 also shows a two-way connection **814** between the switch and the RC. The two-way connection allows the RC to answer queries that are generated by the switch as part of the routing process.

## Claims

1. A method for routing a call made over a network, comprising the steps of:
(a) directing the call to a network switch;
(b) generating a query at said network switch and passing said query to a database, said database having stored therein current priced call data for a network customer;
(c) retrieving at least a portion of said current priced call data from said database in response to said query; and
(d) using said retrieved portion of said current priced call data to route the call within the network.

2. The method according to claim 1, wherein said step of retrieving at least a portion of said current priced call data comprises retrieving a current bill for said network customer; and said step of using said retrieved portion of said current priced call data comprises using said retrieved current bill to route the call within the network.

3. The method according to claim 1, wherein said current priced call data comprises a current bill for said network customer.

4. A method for routing a call made over a network, comprising the steps of:
(a) directing the call to a network switch;
(b) generating a query at said network switch and passing said query to a database, said database having stored therein current priced call data for a network customer;
(c) retrieving at least a portion of said current priced call data from said database in response to said query;
(d) determining, on the basis of said retrieved portion of said current priced call data, whether the call should be routed within the network; and
(e) routing the call within the network when it is determined that the call should be routed, and blocking the call when it is determined that the call should not be routed.

5. The method according to claim 4, wherein said step of retrieving at least a portion of said current priced call data comprises retrieving a current bill for said network customer; and said step of using said retrieved portion of said current priced call data comprises using said current bill to route the call within the network.

6. The method according to claim 4, wherein said current priced call data comprises a current bill for said network customer.

7. A system for routing a call made over a network, comprising the steps of:
(a) means for directing the call to a network switch;
(b) means for generating a query at said network switch;
(c) a database for receiving said query from said network switch, said database having stored therein current priced call data for a network customer;
(c) means for retrieving at least a portion of said current priced call data from said database in response to said query; and
(d) means for routing the call according to said retrieved portion of said current priced call data.

8. The system according to claim 7, wherein said retrieved portion of said current priced call data includes a current bill for said network customer, and said means for routing the call according to said retrieved portion of said current priced call data comprises means for routing the call according to said current bill.

9. The method according to claim 7, wherein said current priced call data comprises a current bill for said network customer.

10. A system for routing a call made over a network, comprising the steps of:
(a) means for directing the call to a network switch;
(b) means for generating a query at said network switch;
(c) a database for receiving said query from said network switch, said database having stored therein current priced call data for a network customer;
(c) means for retrieving at least a portion of said current priced call data from said database in response to said query;
(d) means for making a determination, on the basis of said retrieved portion of said current priced call data, whether to route the call within the network; and
(e) means for routing the call within the network when it is determined that the call should be routed, and means for blocking the call when it is determined that the call should not be routed.

11. The system according to claim 10, wherein said retrieved portion of said current priced call data includes a current bill for said network customer, and said means for routing the call according to said retrieved portion of said current priced call data comprises means for routing the call according to said current bill.

12. The method according to claim 10, wherein said current priced call data comprises a current bill for said network customer.
